(19) Europäisches Patentamt
European Patent Office
Office européen des brevets

(11) **EP 2 332 099 B1**

(12) **FASCICULE DE BREVET EUROPEEN**

(45) Date de publication et mention
de la délivrance du brevet:
**17.06.2020 Bulletin 2020/25**

(51) Int Cl.:
***G06Q 10/00*** (2012.01)        ***G06K 19/07*** (2006.01)
***G06Q 90/00*** (2006.01)

(21) Numéro de dépôt: **09753151.1**

(22) Date de dépôt: **29.09.2009**

(86) Numéro de dépôt international:
**PCT/FR2009/051839**

(87) Numéro de publication internationale:
**WO 2010/034957 (01.04.2010 Gazette 2010/13)**

(54) **LANIERES SOUPLE INTEGRANT DES MODULES D'ANTENNES DE LECTEUR RFID**

FLEXIBLE RIEHMEN MIT EINGEBETTETEN RFID-LESEANTENNENMODULEN

FLEXIBLE STRAPS HAVING EMBEDDED RFID READER ANTENNA MODULES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.09.2008 FR 0805326**

(43) Date de publication de la demande:
**15.06.2011 Bulletin 2011/24**

(73) Titulaire: **Bahou, Azdine**
**13013 Marseille (FR)**

(72) Inventeur: **Bahou, Azdine**
**13013 Marseille (FR)**

(74) Mandataire: **Roman, Alexis**
**Cabinet Roman**
**35 rue Paradis**
**B.P. 30064**
**13484 Marseille Cedex 20 (FR)**

(56) Documents cités:
**WO-A-2009/065074        US-A1- 2002 089 434**
**US-A1- 2004 004 577        US-A1- 2007 155 327**

- **GORE A ET AL: "Online calibration of floating gate detectors for RFID sensors" CIRCUITS AND SYSTEMS, 2005. 48TH MIDWEST SYMPOSIUM ON CINICINNATI, OHIO AUGUST 7-10, 2005, PISCATAWAY, US LNKD-DOI:10.1109/MWSCAS.2005.1594046, 7 août 2005 (2005-08-07), pages 87-90, XP010893534 ISBN: 978-0-7803-9197-0**
- **"SCREEN WIPERS GO HI-TECH" MOTORSHIP, NEXUS MEDIA COMMUNICATIONS, SWANLEY, KENT, GB, vol. 83, no. 978, 1 janvier 2002 (2002-01-01), page 43, XP001089353 ISSN: 0027-2000**

EP 2 332 099 B1

## Description

La présente invention concerne des lanières souples intégrant des modules d'antennes de lecteur de Radio Fréquence Identification communément appelés RFID. Ces lanières souples servant de porte ou de rideau de séparation dans les zones de stockage (entrepôts) ou de transport (véhicules de transport) dans le secteur de la logistique et de l'entreposage.

On connait par le document US 2004/004577 (FORSTER) un dispositif conforme au préambule de la revendication 1.

Le dispositif selon l'invention comporte un nombre de lanières souples servant à la séparation des différentes zones de passage et d'entreposage en logistique d'une part et d'antenne RFID d'autre part. Les éléments rayonnant d'antennes sont intégrés dans l'âme en matière souple de chacune des lanières. D'autres capteurs sont disposés au recto et au verso de chacune des lanières afin d'assurer de part et d'autre la gestion du sens de passage et d'assurer ainsi la double fonctionnalité de porte et d'antenne lecteur RFID auquel ladite antenne est associée. Dans un mode de réalisation les antennes à lanières souples intégreront des biocapteurs qui serviront à assurer la traçabilité qualitative des matières ou objets entreposés de part et d'autre du rideau à lanière. Dans un mode de réalisation le dispositif intègre des modules optiques de visualisation de type OLED ou PHOLED, lesquels permettent de signaliser l'état quantitatif et qualitatif de la transaction de passage de l'objet au niveau du rideau. Le dispositif constitue un réseau d'antennes RFID souples et adaptées à la taille et au nombre de transpondeurs à lire.

Plus particulièrement, l'invention a pour objet un dispositif de rideau ou de porte à lanières souples, conforme à la revendication 1.

Le développement des applications de logistique à base de technologie d'identification radiofréquence (RFID) notamment dans les zones d'entreposage implique l'installation de portiques équipés d'antennes lecteur agencées autour du portique de manière à générer un champs capable de rayonner dans toutes les directions de l'espace dans le but d'identifier toutes les populations de transpondeurs qui traversent le portique.

Les antennes existantes sont généralement constitués de rayonnants fabriqués à partir d'un support rigide sur lequel sont gravés les différents éléments conducteurs formant le rayonnant et intégrés généralement dans un boîtier en matériaux isolant rigide. Le nombre d'antennes installées dans un portique permet au lecteur auquel elles sont associées de créer un champ tournant de qualité proportionnelle au nombre d'antennes. Dans le cas d'une zone de déchargement tel qu'un quai d'entrepôt ou haillon de véhicule de transport, la juxtaposition des portes et des portiques d'antennes associés implique une gestion rationnelle des implantations des rayonnant sur les portiques d'une part et la gestion du temps de commutation de chacun des portiques d'autre part. Cela dans le but principal d'éviter des interférences radioélectriques d'un portique d'antenne sur les portiques voisins.

Il existe bien évidement plusieurs techniques de multiplexage de rayonnant et de portiques entre eux, afin de limiter au mieux les risque d'interférence des portiques entre eux. Les solutions de multiplexages de chacun des rayonnant impliquent la mise en place de procédés complexes de gestion du champ tournant, la complexité de ces dispositifs de multiplexage est souvent proportionnelle à la surface et à l'organisation de la gestion des flux physiques de la zone d'entreposage. Il en résulte que la mise en place de dispositif de gestion d'entrepôt par technologie RFID est souvent tributaire et limitée en déploiement à la répartition judicieuse des antennes portique dans la zone de passage des objets. Il en est de même pour les quais de chargement qui réceptionnent des véhicules contenants des colis en vrac ou sous forme de palettes. Dans le cas précis des véhicules de transport de colis un élément fondamental de la traçabilité des colis résulte dans la faculté de pouvoir prédire avec précision le sens de passage du colis au niveau du véhicule, d'un point de vue de la logistique, un paramètre fondamental de la traçabilité consiste à savoir de manière précise si un colis est chargé ou déchargé à un point critique de contrôle de flux.

L'homme de l'art sait très bien que le principal avantage d'une puce RFID c'est de répondre automatiquement à un champ magnétique ou électromagnétique lorsqu'elle se trouve justement stimulée par lesdits champs. Cet avantage technologique qui fait le principal attrait de la technologie RFID trouve son inconvénient dans les applications de logistique, ou il faut précisément compter le nombre de colis ou d'objets ainsi que leur sens de passage.

L'autre avantage de la technologie RFID réside dans la faculté d'un lecteur à lire en instantané une grande population de puces RFID se trouvant dans le champ de l'antenne rayonnante, cette faculté technique trouve sa limite dans la capacité du lecteur à gérer d'une part les doublons d'objets et à vérifier les absences d'objets par manque de visibilité magnétique ou électromagnétique de la puce RFID dans le champ du lecteur. Un autre inconvénient des portiques d'antennes réalisés avec des antennes classiques se situe lors du passage d'une palette de colis, ou d'un empilement de palettes (gerbées) transportées par un véhicule de manutention. Selon la position du chariot élévateur lors du passage sous le portique, il arrive que certains colis soient ignorés par le lecteur RFID car leur position par rapport au champ rayonné par l'antenne se trouve dans une zone d'ombre électromagnétique pour le lecteur. Cet inconvénient est très fréquent et difficile à gérer pour de nombreuses palettes gerbées en logistique. Une autre difficulté des antennes classiques de lecteurs de RFID pour réaliser un portique de passage en entrepôt de logistique est la dégradation de leurs performances électromagnétiques en fonction de la température et de l'humidité ambiante.

Ainsi de nombreuse applications pilotes en RFID ont des difficultés majeures à se déployer industriellement du fait de l'instabilité des performances en milieu réel. En effet la propagation d'une onde électromagnétique est tributaire de l'impédance du milieu qu'elle traverse, la représentation mathématique d'une antenne lecteur est de la forme ZA= RA+ JXA si l'on considère une antenne de puce RFID son impédance est modélisée par l'équation ZC= RC+ JXC , la distance de lecture dans le vide est modélisée par l'équation :

$$r = \frac{\lambda}{4\pi} \sqrt{\frac{P_t G_t G_r \tau}{P_{th}}}$$

A étant la fréquence de fonctionnement

$P_t$ est la puissance rayonnée par l'antenne du lecteur

$G_t$ est le gain de l'antenne lecteur

$G_r$ est le gain de l'antenne du TAG RFID

$P_{th}$ est la puissance minimale d'activation du TAG RFID

$$\tau = \frac{4 R_c R_a}{|Z_c + Z_a|^2}, \quad 0 \leq \tau \leq 1$$

Γ est le coefficient de transmission de puissance entre le TAG RFID et le lecteur.

On remarquera que le maximum d'efficacité de transmission est obtenu lorsque Γ=1 c'est-à-dire que les impédances caractéristique du TAG et de l'antenne lecteur sont égales à leur impédance caractéristique (généralement 50Ω). La difficulté sur l'exploitation d'une solution RFID en milieu réel est liée aux dérives des parties réactives des impédances de part et d'autre de la liaison RFID , selon le milieu et la nature de l'environnement électromagnétique ou électrique (humidité, température, matériaux...) il est très difficile pour une simple antenne lecteur d'assurer la lecture d'une population de TAG RFID selon l'orientation de ceux-ci dans le champs de l'antenne.

Il existe par ailleurs en logistique un besoin latent qui consiste à fournir aux personnel dédié à la manutention des colis des informations temps réel sur l'état de l'opération de manutention, par exemple lors du chargement d'un camion ou d'une remorque il est impératif de savoir en temps réel si le colis chargé est dévoyé ou non. Cette indication précieuse en logistique est un gain de productivité très important et son installation dans un dispositif de logistique est un facteur de réduction important des pertes financières dues aux colis dévoyés. Une des caractéristiques émergeante de la logistique, consiste à contrôler en temps réel la qualité des objets ou de l'environnement de stockage des produits. En effet devant la recrudescence des actes de terrorisme , la fonction de logisticien va devoir rapidement intégrer la fonction de contrôle qualitatif des substances transportées et surtout d'être capable de détecter en temps réel , la présence d'une substance toxique particulière , ou d'un produit spécifiquement dangereux. Ces fonctions élémentaires du logisticien qui assurera le contrôle quantitatif et qualitatif des produits transportés ou stockés par lui imposeront à terme des outils techniques qui assureront toutes ces protections. Un autre inconvénient des dispositifs d'antennes existants, est leur faible résistance aux chocs mécaniques inhérents au type de manutention dans la logistique. Les fortes cadences demandées dans les opérations de logistiques, font que le personnel de manutention ne porte pas une grande attention aux matériels connexes à son activité et bien souvent les chocs sur les produits notamment les portiques et les antennes associées sont nombreux et du fait de leurs rigidité ils se dégradent.

Le dispositif selon l'invention permet dans un mode de réalisation préférentiel de répondre à toutes ces exigences de la logistique. En effet une analyse systémique d'une chaine de logistique indique que les points de contrôle critique des produits se situent au niveau de chacune des portes de passage que traversera le produit ou le colis, porte de quai de déchargement, porte de véhicule roulant, porte de compartiment frigorifique. Tous ces endroits obligés de passage en logistique et entreposage sont généralement équipés de rideaux à lanières souples. Selon un mode de réalisation de l'invention, c'est dans le corps de la lanière souple que seront intégrés les modules d'antennes lecteurs RFID.

La figure (1) représente une vue de face et en coupe d'un modèle de réalisation d'une lanière équipée dans son âme d'un réseau d'antennes RFID. Sans être exhaustif ce mode de réalisation concerne un mode de fonctionnement dans la gamme UHF de la RFID, l'homme de l'art comprendra que les modules d'antennes (3) sont de type patch c'est-à-dire composé d'un plan de masse, d'un diélectrique et d'un rayonnant. Les rayonnants peuvent être disposés de chaque côté de la lanière, auquel cas, un seul plan de masse peut être utilisé pour deux dits rayonnants. Toutefois, le procédé selon l'invention s'adresse à tout type de module d'antenne lecteur dans la RFID notamment les antennes HF ou LF à couplage magnétique. Dans le mode de réalisation dans la gamme HF ou LF, les modules d'antenne sont du type boucle à couplage magnétique, sans utilisation de plan de masse.

L'invention selon un mode de réalisation comporte un nombre de modules rayonnants (3) du type patch intégrés dans l'âme de la lanière rideau. Dans ce cas, l'âme chauffante (9) constitue également le plan de masse.

Les modules d'antenne (3) sont judicieusement répartis sur toute la surface de la lanière de façon à permettre au champ (électrique ou magnétique) rayonné par le lecteur auquel l'antenne est associée, d'être uniformément réparti sur toute la hauteur de la palette de produits à identifier par le biais de TAGs RFID.

Les modules d'antenne (3) sont reliés entre eux par l'intermédiaire de diviseurs de puissance (5) et de circuits déphaseurs (6) qui assurent une répartition parfaite du champ rayonnant au niveau de chaque module d'antenne judicieusement réparti sur toute la surface de la lanière souple. La commutation du champ rayonnant sur chacun des modules antenne (3) s'effectue grâce à des capteurs optiques (8) d'une part disposés judicieusement à proximité de chacun des modules d'antenne (3) et à des capteurs à base de MEMS ou MOEMS associés aux différents diviseurs de puissance (5). Ce mode de réalisation permet grâce aux capteurs optiques (8) intégrés dans la lanière, de détecter la présence d'un colis ou d'une palette en modulant et commutant le champ rayonnant sur chaque module d'antenne (3) pour lesquels le détecteur optique (8) aura détecté la présence d'un colis ou d'une palette.

La gestion de la commutation automatique des modules d'antenne (3) ainsi que la distribution du champ rayonnant sera assurée par un module (2) de gestion microélectronique agencé autour d'un microcontrôleur ou d'un ASIC qui assurera de manière autonome la gestion automatique de tous les organes de lecture et de contrôle montés sur la lanière.

Dans un mode de réalisation préférentiel de l'invention le module (2) de gestion automatique sera agencé autour d'un micromodule intégrant d'une part une communication radio fréquence de type ZYGBEE ou autre protocole ainsi que tous les moyens de gestion technique de la lanière ainsi décrite. Ce module (2) de gestion, sans être exhaustif dans son mode de réalisation aura pour tache principale de contrôler le sens de passage du colis ou de la palette grâce à des détecteurs de mouvement (4) intégrés dans la lanière et qui indiquerons au module (2) le sens du mouvement de celle-ci selon les axes (X,Y , Z). Le module (2) de gestion assure la distribution du champ rayonnant vers tous les modules antennes (3) en contrôlant d'une part la présence d'un colis ou objet à coté de chaque rayonnant et assurant la commutation de la puissance rayonnée par le biais des capteurs à base de MEMS ou MOEMS disposés au niveau des diviseurs de puissance (5) intégrés dans la lanière.

Le module (2) de gestion mesure par ailleurs en permanence la température de part et d'autre de la lanière grâce à des capteurs de température (11) disposés de part et d'autre de la lanière. Il assure en outre la régulation de la température de la lanière en générant un courant de chauffage par effet Peltier dans le circuit de masse des Patchs d'antenne lorsque ces derniers sont inactifs. En effet, dans le cas des modules d'antennes (3) en UHF, et lorsque les lanières sont inactives, le plan de masse est utilisé comme élément chauffant ou refroidissant, par le biais de l'âme chauffante (9). Lorsque les lanières sont actives, la fonction de régulation de température du plan de masse est inhibée. Dans le cas des modules d'antennes (3) non UHF, ou en configuration sans antennes, l'âme chauffante (9) assure la régulation de la température. Ainsi pendant toute la phase de repos de la lanière les rayonnants d'antennes sont maintenus à température constante par le module (2) de gestion. La consigne de température optimale sera établie pour chaque configuration d'antenne et stockée dans la mémoire du module (2) de gestion qui intégrera par ailleurs les valeurs de l'impédance des rayonnants aux valeurs de la température consignée.

Afin de permettre le contrôle visuel in situ des opérations de logistiques au niveau du passage doté de lanières selon l'invention, celles-ci comportent un module de visualisation (7) qui peut être soit intégré directement sur un substrat souple dans la lanière et être constitué à base de LED, OLED ou PHOLED ou un module de visualisation autonome bâti autour d'un microcontrôleur ZIGBEE et qui se fixe sur la lanière par tout dispositif mécanique connu de l'homme de l'art et qui permet sa fixation ou son retrait facile. Dans les deux cas les modules de visualisation (7) sont soit associés au module (2) de gestion soit au dispositif informatique global de l'entrepôt qui les adresse individuellement pour afficher tout type de message ou de pictogramme nécessaires au bon déroulement de la transaction de logistique (matière dangereuse, température trop haute, colis dévoyé, manquants, erreur de lecture...). Ces affichages pourront être fugitifs ou fixes pour les défauts graves en matière de logistique. Dans le cas de module d'affichage (7) à base de LED, PHOLED ou OLED ce dernier sera directement intégré dans l'âme de la lanière sous la forme d'un support souple. Dans un mode préférentiel de réalisation du module d'affichage (7), ce dernier sera fabriqué par dépôt de couches minces lors de la fabrication des différents modules d'antenne (3) intégrés dans l'âme de la lanière. Ainsi doté, le dispositif selon ce mode de réalisation de l'invention permet de contrôler sélectivement tous les points critiques de contrôle d'un entrepôt de logistique et d'envoyer en temps réel des informations capitales pour l'optimisation de la logistique. Ainsi l'invention lorsqu'elle est montée dans une remorque de camion permet en temps réel lors du chargement de vérifier qu'il n'y a pas de colis dévoyés dans le chargement, il en sera de même à la livraison.

Dans un mode de réalisation de l'invention, celle-ci comporte un module (10) de détection de substances toxiques ou dangereuses constitué de biocapteurs et d'un microcontrôleur intégrant un protocole de communication préférentiellement ZIGBEE ou autre dans lequel est intégré un bio senseur qui fonctionne par détection parallèle par une mesure de l'ADN de la substance à contrôler. Ce dispositif d'analyse en temps réel est fixé dans l'âme de la lanière ou directement intégrée dans celle-ci afin d'optimiser la sécurité de sa fonctionnalité. La sonde de mesure est amovible et est constituée d'un laboratoire sur puce qui permet d'une part de caractériser la ou les substances spécifiques à contrôler. La sonde est dotée par ailleurs de tous les moyens qui permettent de l'identifier et d'assurer sa traçabilité (la date, le lieu, la nature de la substance détectée). Dans un mode de réalisation, le module (10) de détection sera capable d'assurer en temps réel les contrôles aux limites en matière de sécurité et d'envoyer un message d'anomalie directement au système informatique de l'entrepôt ou directement au module (2) de gestion pour affichage en local sur le module de visualisation (7).

Dans un mode de réalisation plus complexe de l'invention, le module (10) de détection est capable de faire une analyse in situ en mode fluorescence et d'envoyer les matrices optiques de la bio puce vers un système de traitement à grande capacité de calcul par le biais de sa liaison ZIGBEE.

Le dispositif tel que décrit est parfaitement destiné au contrôle en temps réel de la quantité et de la qualité des produits qui transitent au niveau du passage de contrôle munis de rideaux à lanières.

Dans un mode de réalisation le module (2) de gestion assure uniquement le fonctionnement de tous les éléments fonctionnels intégrés dans la lanière et gère uniquement la transparence du module d'antenne(3) analogique, dans ce cas le lecteur auquel est associé la lanière ne voit que l'impédance de l'antenne et il assure lui-même la détection des TAG RFID qui se présentent dans le champ de la lanière.

Dans un mode de réalisation beaucoup plus sophistiqué, le module (2)de gestion assure d'une part toutes les fonctionnalités de la lanière et aussi le traitement numérique des TAG RFID grâce à un jeu de composants qui assurent le traitement du champ électrique ou magnétique ainsi que le décodage numérique des Tags RFID qui se présentent devant la lanière. Ce mode de réalisation est un lecteur RFID intégré dans la lanière.

L'invention s'avère être très adaptée pour réaliser des portiques de logistiques intelligents, qui intègrent d'une part la possibilité d'identifier tous les Tags RFID qui se présentent de part et d'autre de la lanière. Il assure par ailleurs le sens de passage de passage des colis et des palettes au niveau de chaque point de contrôle critique. L'invention est parfaitement adaptée à tous les compartiments ou véhicules roulants qui assurent le transport de marchandises. Dans ce mode de réalisation les lanières sont montées à l'ouverture de la porte du compartiment de transport (camion, remorque, quai de déchargement, portique...) par le biais de sa liaison ZIGBBE le rideau à lanière envoie à l'informatique de l'entrepôt de stockage le nombre et la nature des produits livrés ou enlevés. L'optimisation du contrôle de logistique peut se graduer par le nombre et la nature des contrôles effectués par les lanières. Ainsi un rideau peut être constitué d'une ou plusieurs lanières selon l'invention, chacune des lanières pouvant être équipée de tout ou partie des fonctionnalités décrites dans l'invention. Dans un mode de réalisation de l'invention, les organes de contrôles de la lanière sont alimentés par une cellule solaire souple intégrée dans la lanière, ou tout type de source d'énergie assurant son autonomie.

Les lanières du dispositif selon l'invention peuvent être réalisées par dépôt de couches minces métalliques, diélectriques, organiques par pulvérisation cathodique ou jet de matière ou tout autre procédé permettant l'empilement de matière conductrices ou diélectriques sur support souple. Le procédé de fabrication pourra permettre la fabrication des rayonnants d'antennes et les éléments de visualisation à base de PHOLED ou OLED.

Dans un mode de réalisation de l'invention les couches internes conductrices pourront être transparentes et conductrices. Le dispositif de lanière selon l'invention comporte tous les connecteurs et accessoires nécessaires à sa fixation et son fonctionnement sur le support du rideau.

Chacune des lanières étant parfaitement indépendante, un logiciel embarqué dans le module (2) de gestion permet d'associer une ou plusieurs lanières à une adresse physique de portique afin d'éviter les interférences entre plusieurs portiques. Le nombre de lanières selon l'invention est compris entre 1 et n lanières selon la nature des résultats à atteindre. Dans le mode de réalisation de l'invention ou le module (2) de gestion est du type passif, c'est-à-dire qu'il n'a pas de fonction de traitement numérique des Tags RFID, c'est le module lecteur auquel il est associé qui fixe d'une part le nombre de lanières à gérer. Dans ce mode de réalisation la lanière selon l'invention est vue par le lecteur comme une simple antenne RFID avec son impédance caractéristique. Le module (2) de gestion gère dans ce cas en automatique toutes les autres fonctionnalités de base du dispositif selon l'invention.

Le dispositif dans ce mode de réalisation s'adapte à tous les lecteurs RFID existants fonctionnant aux normes établies par la règlementation, il se fixe mécaniquement par le biais d'un dispositif judicieusement adapté à cet effet (1) et qui intègre tous les connecteurs électriques nécessaires au dispositif selon l'invention.

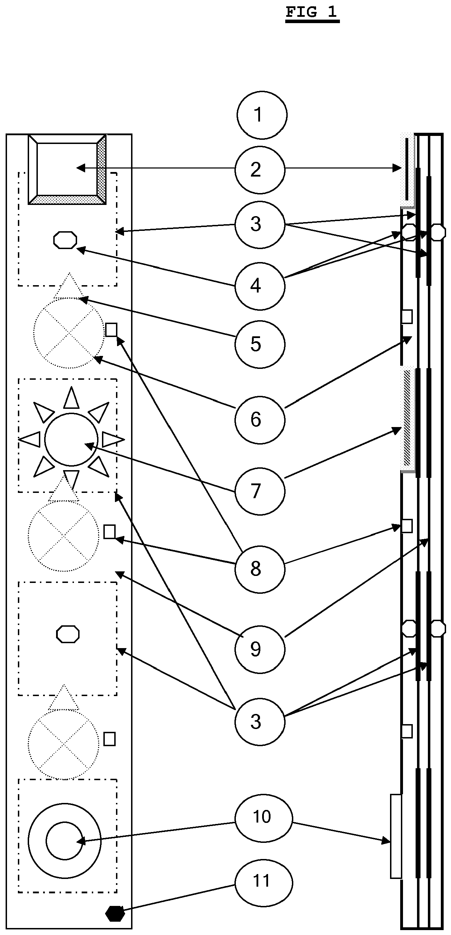

**Liste des références figure 1 :**

| 1 | Dispositif de fixation mécanique et connexions électrique |
|---|---|
| 2 | Module microélectronique de gestion de la lanière |
| 3 | Rayonnants d'antenne |
| 4 | Détecteurs de mouvement |
| 5 | Circuits diviseurs de puissance à base de MEMS |
| 6 | Circuit de changement de phase |
| 7 | Module d'affichage à base de LED, OLED, PHOLED |
| 8 | Détecteurs d'objets à base de MOEMS |
| 9 | Ame métallique chauffante de la lanière |
| 10 | Module de mesure à base de bio senseur |
| 11 | Détecteur de température |

**Revendications**

1. Dispositif de rideau ou de porte à lanières souples, au moins une lanière comporte :

    - des modules d'antennes (3) de lecteur RFID intégrés dans l'âme de la lanière, lesdits modules étant répartis sur toute la surface des ladite lanière,
    - des détecteurs (8) disposés à proximités de chacun des modules d'antennes (3), lesdits détecteurs permettant de détecter la présence d'un colis ou d'une palette,
    - un module (2) de gestion microélectronique intégré dans les lanières et configuré pour :
    o réaliser la gestion automatique du champ rayonné par les modules d'antennes (3) en assurant la distribution du champ rayonnant vers tous lesdits modules d' antennes en

        ▪ contrôlant, au moyen des détecteurs (8), la présence d'un objet ou d'un colis à côté de chaque module d'antennes (3),
        ▪ assurant la commutation de la puissance rayonnée,

    - un module de visualisation (7) à base de LED, OLED ou PHOLED permettant de visualiser l'état de la transaction de logistique au niveau du rideau ou de la porte

    **caractérisé en ce que** :

    - la lanière comporte :

        ∘ une âme chauffante (9),
        ∘ des capteurs de température (11) disposés de part et d'autre de la lanière,
        ∘ des diviseurs de puissance (5) et des circuits déphaseurs (6) reliant les modules d'antennes (3) de manière à assurer une répartition parfaite du champ rayonnant au niveau de chacun desdits modules,
        ∘ **des capteurs à base de MEMS ou MOEMS agissant sur les** diviseurs de puissance (5) et des circuits déphaseurs (6),
        ∘ un moyen (4) pour contrôler le sens de passage des objets au niveau du rideau ou de la porte,
        ∘ un module (10) de détection de substances toxiques ou dangereuses permettant de détecter tout produit ou substance à contrôler au niveau du passage du rideau ou de la porte

    - les détecteurs (8) sont des détecteurs optiques,

    - la commutation de la puissance rayonnée est assurée par le biais des capteurs à base de MEMS ou MOEMS,
    - le module (2) de gestion microélectronique est en outre configuré pour mesurer et réguler la température des modules d'antennes (3), par l'intermédiaire respectivement des capteurs de température (11) et de l'âme chauffante (9), laquelle régulation est réalisée en générant un courant de chauffage par effet Peltier dans un circuit de masse desdits modules d'antennes lorsque ces derniers sont inactifs.

2. Dispositif selon la revendication 1), **caractérisé en ce qu'**il comporte un ou plusieurs modules (10) de détection de substances toxiques ou dangereuses constitué d'un microcontrôleur intégrant un organe de communication radio dans lequel est intégré un bio senseur ou des bio senseurs fonctionnant par détection parallèle de l'ADN de la substance à contrôler.

3. Dispositif selon la revendication 2), **caractérisé en ce que** les modules (10) de détection sont fixés mécaniquement dans l'âme de la lanière ou directement intégrés dans celle-ci.

4. Dispositif selon l'une des revendications 2) ou 3), **caractérisé en ce que** les bio senseurs sont amovibles et comportent tous les moyens pour caractériser la ou les substances spécifiques à contrôler, ils sont dotés par ailleurs de tous les moyens qui permettent leur identification et d'assurer leur traçabilité.

5. Dispositif selon les revendications précédentes, **caractérisé en ce que** le module de gestion microélectronique (2) est doté d'un organe de communication radio permettant de communiquer avec les lanières du rideau et d'assurer toutes les transactions liées à l'état de la transaction de logistique au niveau dudit rideau.

6. Dispositif selon la revendication 5), **caractérisé en ce que** les le module de gestion microélectronique (2) est configuré pour recevoir et envoyer tout type d'état de transaction sur la lanière vers un système informatique distant.

7. Dispositif selon la revendication 5), **caractérisé en ce que** le module (2) de gestion microélectronique intègre un organe de traitement numérique des puces RFID traitées par les modules d'antenne (3), un moyen de commutation et de gestion desdits rayonnants d'antenne permettant à un lecteur RFID de voir la ou les lanières comme de simples antennes de lecteurs RFID.

8. Dispositif selon l'une des revendications précédentes, **caractérisé en ce qu'**il comporte un moyen d'alimentation électrique autonome de type photovoltaïque intégré ou fixé à la lanière, module batterie ou connecteur électrique fixés sur le rideau et servant au fonctionnement dudit dispositif en mode actif.

9. Dispositif selon l'une des revendications précédentes, **caractérisée en ce que** les organes de contrôles de la lanière sont alimentés par une cellule solaire souple intégrée dans la lanière, ou tout type de source d'énergie assurant son autonomie.

10. Dispositif selon l'une des revendications précédentes, **caractérisé en ce que** le module (2) de gestion assure la régulation de la température de sorte que : - lorsque les lanières sont inactives, le plan de masse est utilisé comme élément chauffant ou refroidissant, par le biais de l'âme chauffante (9), lorsque les lanières sont actives, la fonction de régulation de température du plan de masse est inhibée.

11. Dispositif selon l'une des revendications précédentes, **caractérisé en ce que** le module (2) de gestion est configuré pour activer ou de désactiver chacune des fonctionnalités de la lanière.

12. Dispositif selon l'une des revendications précédentes, **caractérisé en ce que** le module (2) de gestion est configurer pour afficher, par voie radio, des messages de logistique ou de sécurité sur le module de visualisation (7) ou de remonter les informations de risque qualité sécurité des bio senseurs montés sur la lanière.

13. Dispositif selon l'une des quelconques revendications précédences, caractérisé en ce les lanières sont réalisées par dépôt de couches minces métalliques, diélectriques, organiques par pulvérisation cathodique ou jet de matière ou tout autre procédé permettant l'empilement de matière conductrices ou diélectriques sur support souple.

**Patentansprüche**

1. Vorhang- oder Türvorrichtung mit flexiblen Riemen, wobei mindestens ein Riemen Folgendes aufweist:

   - RFID-Lesegerät-Antennenmodule (3), die in den Leiter des Riemens integriert sind, wobei die Module über die gesamte Fläche des Riemens verteilt sind,
   - Detektoren (8), die in der Nähe jedes der Antennenmodule (3) angeordnet sind, wobei es die Detektoren erlauben, das Vorhandensein eines Pakets oder einer Palette zu detektieren.

   - ein mikroelektronisches Verwaltungsmodul (2), das in die Riemen integriert ist und das dazu ausgebildet ist:
   ◦ die automatische Verwaltung des Felds durchzuführen, das durch die Antennenmodule (3) ausgestrahlt wird, wobei die Verteilung des strahlenden Felds zu all den Antennenmodulen sichergestellt wird, indem

      ▪ mittels Detektoren (8) das Vorhandensein eines Gegenstands oder eines Pakets neben jedem Antennenmodul (3) kontrolliert wird,
      ▪ das Umschalten der ausgestrahlten Leistung sichergestellt wird, wobei es ein Darstellungsmodul (7) auf Grundlage von LED, OLED oder PHOLED erlaubt, den Status der Logistiktransaktion am Vorhang oder an der Tür darzustellen, **dadurch gekennzeichnet, dass**:

   - der Riemen Folgendes aufweist:

      ◦ einen Heizleiter (9),
      ◦ Temperatursensoren (11), die beiderseits des Riemens angeordnet sind,
      ◦ Leistungsteiler (5) und Phasenschieberschaltungen (6), die die Antennenmodule (3) so verbinden, dass eine perfekte Verteilung des Strahlungsfelds an jedem der Module sichergestellt wird,
      ◦ MEMS- oder MOEMS-basierte Sensoren, die auf die Leistungsteiler (5) wirken, und Phasenschieberschaltungen (6),
      ◦ ein Mittel (4) zur Steuerung der Vorbeilaufrichtung der Gegenstände an dem Vorhang oder der Tür,
      ◦ ein Modul (10) zur Erkennung giftiger oder gefährlicher Stoffe, das es erlaubt, ein beliebiges Produkt oder einen beliebigen Stoff zu detektieren, das bzw. der am Durchgang des Vorhangs oder der Tür zu kontrollieren ist

   - die Detektoren (8) optische Detektoren sind,
   - das Umschalten der ausgestrahlten Leistung mittels MEMS- oder MOEMS-basierten Sensoren sichergestellt wird,
   - das mikroelektronische Verwaltungsmodul (2) ferner dazu ausgebildet ist, die Temperatur der Antennenmodule (3) mittels der Temperatursensoren (11) und des Heizleiters (9) zu messen bzw. zu regeln, wobei die Regelung durch Erzeugung eines Heizstroms durch den Peltiereffekt in einer Masseschaltung der Antennenmodule durchführt wird, wenn letztere inaktiv sind.

2. Vorrichtung nach Anspruch 1, **dadurch gekenn-**

**zeichnet, dass** sie ein oder mehrere Module (10) zur Erkennung giftiger oder gefährlicher Stoffe aufweist, das von einem Mikrocontroller gebildet ist, der ein Funkkommunikationselement enthält, in welches ein Biosensor oder Biosensoren integriert ist bzw. sind, die mittels paralleler Detektion der DNA des zu kontrollierenden Stoffs funktionieren.

3. Vorrichtung nach Anspruch 2, **dadurch gekennzeichnet, dass** die Detektionsmodule (10) im Leiter des Riemens mechanisch befestigt oder direkt darin integriert sind.

4. Vorrichtung nach einem der Ansprüche 2 oder 3, **dadurch gekennzeichnet, dass** die Biosensoren herausnehmbar sind und alle Mittel aufweisen, um den oder die zu kontrollierenden bestimmten Stoffe zu charakterisieren, sie ferner mit allen Mitteln versehen sind, die deren Identifizierung erlauben und deren Rückverfolgbarkeit sicherzustellen.

5. Vorrichtung nach den vorhergehenden Ansprüchen, **dadurch gekennzeichnet, dass** das mikroelektronische Verwaltungsmodul (2) mit einem Funkkommunikationselement versehen ist, das es erlaubt, mit den Riemen des Vorhangs zu kommunizieren und alle Transaktionen, die mit dem Status der Logistiktransaktion in Verbindung stehen, an dem Vorhang sicherzustellen.

6. Vorrichtung nach Anspruch 5, **dadurch gekennzeichnet, dass** das mikroelektronische Verwaltungsmodul (2) dazu ausgebildet ist, jede Art von Transaktionsstatus auf dem Riemen an ein entferntes Computersystem zu senden.

7. Vorrichtung nach Anspruch 5, **dadurch gekennzeichnet, dass** das mikroelektronische Verwaltungsmodul (2) ein Element zur digitalen Verarbeitung der RFID-Chips enthält, die von den Antennenmodulen (3) verarbeitet werden, wobei ein Mittel zum Umschalten und zur Verwaltung der Antennenstrahler es einem RFID-Lesegerät erlaubt, den oder die Riemen als einfache Antennen von RFID-Lesegeräten zu sehen.

8. Vorrichtung nach einem der vorhergehenden Ansprüche, **dadurch gekennzeichnet, dass** es ein unabhängiges Stromversorgungsmittel vom Photovoltaik-Typ, das in den Riemen integriert oder daran befestigt ist, ein Batteriemodul oder einen elektrischen Verbinder, die an dem Vorhang befestigt sind und dem Betrieb der Vorrichtung im aktiven Modus dienen, aufweist.

9. Vorrichtung nach einem der vorhergehenden Ansprüche, **dadurch gekennzeichnet, dass** die Steuerungselemente des Riemens durch einer flexible Solarzelle versorgt werden, die in den Rahmen integriert ist, oder von einer beliebigen Art von Energiequelle, die dessen Unabhängigkeit gewährleistet.

10. Vorrichtung nach einem der vorhergehenden Ansprüche, **dadurch gekennzeichnet, dass** das Verwaltungsmodul (2) die Regelung der Temperatur sicherstellt, damit: - wenn die Riemen inaktiv sind, die Masseebene durch den Heizleiter (9) als Heiz- oder Kühlelement genutzt wird, wenn die Riemen aktiv sind, die Temperaturregelfunktion der Masseebene gehemmt ist.

11. Vorrichtung nach einem der vorhergehenden Ansprüche, **dadurch gekennzeichnet, dass** das Verwaltungsmodul (2) dazu ausgebildet ist, jede der Funktionalitäten des Riemens zu aktivieren oder zu deaktivieren.

12. Vorrichtung nach einem der vorhergehenden Ansprüche, **dadurch gekennzeichnet, dass** das Verwaltungsmodul (2) dazu ausgebildet ist, über Funk Logistik- oder Sicherheitsmeldungen auf dem Darstellungsmodul (7) anzuzeigen oder die Informationen zu Qualitäts-Sicherheits-Risiken der Biosensoren, die an dem Riemen angebracht sind, zurückzuverfolgen.

13. Vorrichtung nach einem der vorhergehenden Ansprüche, **dadurch gekennzeichnet, dass** die Riemen durch Abscheidung dünner, dielektrischer, organischer Metallschichten durch Kathodenzerstäubung oder Materialstrahl oder ein beliebiges anderes Verfahren, das den Schichtaufbau leitender oder dielektrischer Materialien auf flexiblem Träger erlaubt, hergestellt sind.

**Claims**

1. Curtain or door device comprising a plurality of flexible strips, a strip in the plurality of flexible strips, comprising:

   - RFID reader antenna modules (3) incorporated into the core of the strip, the aforementioned antenna modules being distributed over the entire surface of the aforementioned strip,
   - Sensors (8) arranged in proximity to each of the antenna modules (3), the aforementioned sensors enabling detection of the presence of a package or object,
   - a microelectronic management module (2) incorporated into the strips and configured to:
   - perform automatic management of the field radiated by the antenna modules by providing the distribution of radiating field to all the aforementioned antenna modules by:

- monitoring, by sensors (8), the presence of an object or a package next to each antenna module,
  - effectuating the switching of the power radiated

- a light-emitting diodes (LED), organic light-emitting diode (OLED) or Phosphorescent organic light-emitting diodes (PHOLED) display module (7) enabling viewing of the state of the logistical transaction at the level of the curtain or door **characterized in that** the strip has:

  ◦ a heating core (9), temperature sensors (11) arranged both sides of the strip,
  ◦ power dividers (5) and phase shifter circuits (6) connecting the antenna modules to provide a complete distribution of the radiation field at each of the aforementioned modules,
  ◦ Micro-Electro-Mechanical Systems (MEMS) or Micro-Opto-Electro-Mechanical Systems (MOEMS) sensors operating on the power dividers (5) and phase shifter circuits (6),
  ◦ A monitor (4) to detect the direction of passage of objects at the level of the curtain or door,
  ◦ a module (10) to detect toxic or hazardous substances enabling detection of any product or substance to be monitored at the level of the curtain or door,
  ◦ sensors (8) are Optical sensors
  ◦ the switching of radiated power is ensured through MEMS or MOEMS-based sensors,
  ◦ the microelectronics management module (2) is also configured to measure and regulate the temperature of antenna modules (3), via temperature sensors (11) and the heating core (9), respectively, which is regulated by generating a Peltier-effect heating current in a mass circuit of said antenna modules when they are inactive.

2. The device according to claim 1), wherein one or multiple modules (10) for detection of toxic or hazardous substances comprising a microcontroller incorporating a radio communication member wherein is incorporated a bio sensor or bio sensors operating by parallel detection of DNA of the substance to be monitored.

3. The device according to claim 2), wherein the modules for detection (10) are mechanically fixed in the core of the strip or directly incorporated therein.

4. The device according to claim 2) or 3), wherein the bio-sensors are removable and comprise all the specific substance or substances to be monitored, and equipped to enable their identification and provide their traceability.

5. The device according to claim 1), wherein the microelectronic management module (2) is provided with a radio communication member enabling communication with the strips of the curtain and effectuating all the transactions relating to the state of the logistical transaction at the level of the aforementioned curtain.

6. The device according to claim 5), wherein the microelectronics management module (2) is configured to receive and send any type of transaction state on the strip to a remote computer system.

7. The device according to claim 5), wherein the microelectronic management module (2) incorporates a digital processing member having RFID chips processed by the antenna modules (3), a switching and management of the aforementioned antenna radiators enabling an RFID reader to see the one or more strip as an RFID reader antennas.

8. The device according to claim 1, further comprising: an autonomous electrical supply of the photovoltaic type incorporated or attached to the strip, battery pack or electrical connector attached on the curtain and used in the operation of the aforementioned device in active mode.

9. The device according to claim 1), wherein control members of the strip are supplied by a flexible solar cell incorporated into the strip, or any type of energy source providing its autonomy.

10. The device according to claim 1), wherein the management module (2) effectuates the regulation of the temperature so that when the strips are inactive, the ground plane is used as a heating or cooling element (9), by the heating core, when the strips are active, the temperature regulation function of the ground plane is inhibited.

11. The device according to claim 1), wherein the management module (2) is configured to activate or to deactivate each function of the strip.

12. The device according to claim 1), wherein the management module (2) is configured to display, by radio pathway, logistical or security messages on the display module (7) or reconstruct safety quality risk data from the bio sensors mounted on the strip.

13. The device according to claim 1), wherein the strips are made by deposit of thin metallic, dielectric, organic layers by cathodic sputter or material spray or

17     **EP 2 332 099 B1**     18

any other method enabling the piling of conductive or dielectric material on flexible substrate.

**10**

FIG 1

**EP 2 332 099 B1**

## RÉFÉRENCES CITÉES DANS LA DESCRIPTION

**Documents brevets cités dans la description**

- US 2004004577 A